# EUROPÄISCHE PATENTANMELDUNG

(11) **EP 2 447 010 A1**
(43) Veröffentlichungstag der Anmeldung: **02.05.2012**
(21) Anmeldenummer: 11182913.1
(22) Anmeldetag: 27.09.2011
(51) Int. Cl.: B25D 16/00

(54) **Steuerungsverfahren für eine Werkzeugmaschine und eine Werkzeugmaschine**

(30) Priorität: 28.10.2010 DE 102010043032
(71) Anmelder: HILTI Aktiengesellschaft, 9494 Schaan (LI)
(72) Erfinder: Profunser, Dieter, 6835 Zwischenwasser (AT); Hoop, Alexander, 9494 Schaan (LI); Binder, Albert, 9470 Buchs (CH)

(57) **Zusammenfassung**

Ein Steuerungsverfahren für eine Werkzeugmaschine hat einen Betriebsmodus und einen Sicherheitsmodus. Im Betriebsmodus treibt ein Motor eine Werkzeugaufnahme rotierend an. Der Motor hat im Betriebsmodus eine Leistungsaufnahme in der Höhe wenigstens eines Betriebswerts. Der Sicherheitsmodus wird ausgelöst, wenn eine Sensoreinrichtung eine Drehblockade einer Werkzeugaufnahme erfasst. Im Sicherheitsmodus wird eine durch elektrische Signale schaltbare Kupplung im Antriebsstrang zwischen Motor und Werkzeugaufnahme periodisch geöffnet und geschlossen und eine Leistungsaufnahme des Motors gegenüber dem Betriebswert verringert wird.

## Beschreibung

### GEBIET DER ERFINDUNG

Die vorliegende Erfindung betrifft ein Steuerungsverfahren für eine Werkzeugmaschine und eine Werkzeugmaschine.

### OFFENBARUNG DER ERFINDUNG

Das erfindungsgemäße Steuerungsverfahren für eine Werkzeugmaschine hat einen Betriebsmodus und einen Sicherheitsmodus. Im Betriebsmodus treibt ein Motor eine Werkzeugaufnahme um eine Arbeitsachse rotierend an. Der Motor hat im Betriebsmodus eine Leistungsaufnahme in der Höhe wenigstens eines Betriebswerts. Der Sicherheitsmodus wird ausgelöst, wenn eine Sensoreinrichtung eine Drehblockade einer Werkzeugaufnahme erfasst. Im Sicherheitsmodus werden eine durch elektrische Signale schaltbare Kupplung im Antriebsstrang zwischen Motor und Werkzeugaufnahme periodisch geöffnet und geschlossen und eine Leistungsaufnahme des Motors gegenüber dem Betriebswert verringert.

Im Sicherheitsmodus wird die Leistungsaufnahme des Motor gegenüber dem Betriebsmodus verringert. Zugleich wird der Motor wiederholt von der Werkzeugaufnahme entkoppelt und wieder an die Werkzeugaufnahme angekoppelt. Ein in die Werkzeugaufnahme eingesetztes Werkzeug wird im Sicherheitsmodus gepulst gedreht.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer;
- Fig. 2: eine Schaltsequenz einer schaltbaren Kupplung des Bohrhammers;
- Fig. 3: ein Zeitverlauf eines an einer Werkzeugaufnahme des Bohrhammers anliegenden Drehmoments und
- Fig. 4: eine rheologische Kupplung.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

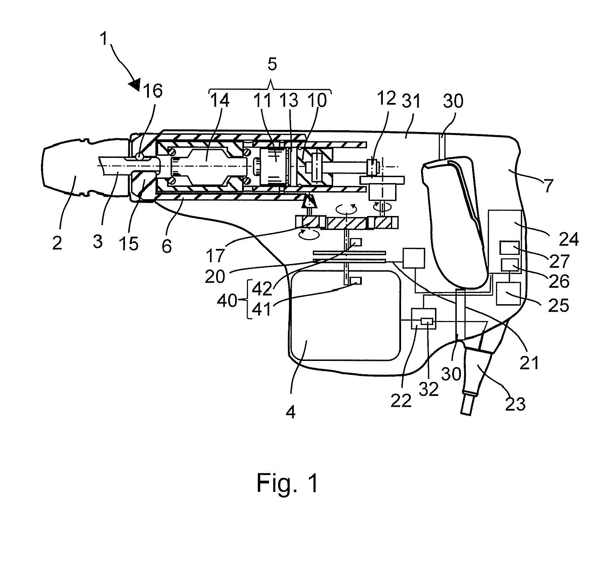

Fig. 1 zeigt schematisch einen Bohrhammer **1.** Der Bohrhammer **1** hat eine Werkzeugaufnahme **2,** in welche als Werkzeug ein Bohrmeißel **3** eingesetzt werden kann. Einen primären Antrieb des Bohrhammers **1** bildet ein Motor **4,** welcher ein Schlagwerk **5** und eine Abtriebswelle **6** antreibt. Ein Anwender kann den Bohrhammer **1** mittels eines Handgriffs **7** führen und mittels eines Systemschalters **8** den Bohrhammer **1** in Betrieb nehmen. Im Betrieb dreht der Bohrhammer **1** den Bohrmeißel **3** kontinuierlich um eine Arbeitsachse **9** und kann dabei den Bohrmeißel **3** längs der Arbeitsachse **9** in einen Untergrund schlagen.

Das Schlagwerk **5** ist beispielsweise ein pneumatisches Schlagwerk **5.** Ein Erreger **10** und ein Schläger **11** sind in dem Schlagwerk **5** längs der Arbeitsachse **9** beweglich geführt. Der Erreger **10** ist über einen Exzenter **12** oder einen Taumelfinger an den Motor **4** angekoppelt und zu einer periodischen, linearen Bewegung gezwungen. Eine Luftfeder gebildet durch eine pneumatische Kammer **13** zwischen Erreger **10** und Schläger **11** koppelt eine Bewegung des Schlägers **11** an die Bewegung des Erregers **10** an. Der Schläger **11** kann direkt auf ein hinteres Ende des Bohrmeißels **3** aufschlagen oder mittelbar über einen im Wesentlichen ruhenden Zwischenschläger **14** einen Teil seines Impuls auf den Bohrmeißel **3** übertragen.

Die Werkzeugaufnahme **2** hat eine Hülse **15,** in welche ein Ende des Bohrmeißels **3** eingesteckt werden kann. Verriegelungselemente in der Hülse **15** sichern den Bohrmeißel **3** gegen ein Herausfallen. Die Hülse **15** hat eine innere, zu dem Bohrmeißel **3** formschlüssige, nicht-rotationssymmetrische Kontur, welche ein Drehmoment von der Hülse **15** auf den Bohrmeißel 3 überträgt. In der Hülse **15** können beispielsweise radial nach innen ragende Zapfen oder Kugeln **16** vorgesehen sein.

Das Drehmoment wird von dem Motor **4** bereitgestellt und über einen Antriebsstrang an die Hülse **15** weitergeleitet. Der Antriebsstrang beinhaltet beispielsweise die Abtriebswelle **6** und ein Getriebe **17** zwischen Motor **4** und der Abtriebswelle **6.** Das Getriebe **17** kann beispielsweise eine Drehzahl des Motors **4** auf eine gewünschte Drehzahl des Bohrmeißels **3** anpassen. Eine elektrisch schaltbare, fremdgeschaltete Kupplung **20** in dem Antriebsstrang ermöglicht ein Unterbrechen der Drehmomentübertragung zwischen Motor **4** und der Hülse **15** ansprechend auf an die Kupplung **20** angelegte Steuersignale **21.**

Die Drehzahl des Motors **4** kann durch eine Motorsteuerung **22** auf einen Sollwert geregelt oder auf einen Maximalwert begrenzt sein. Eine Leistungsaufnahme des Motors **4** im Betrieb, der Betriebswert, entspricht vorzugweise etwa der Nennleistung des Motors **4,** wodurch ein optimales Verhältnis von Leistung und Gewicht erhalten wird. Der Motor **4** ist vorzugsweise ein Elektromotor, insbesondere ein mechanisch kommutierender Universalmotor. Der Elektromotor wird aus einer Batterie oder über einen Netzanschluss **23** gespeist. Alternativ kann ein Verbrennungsmotor verwendet werden, welchem beispielsweise gasförmiger oder flüssiger Brennstoff zugeführt wird.

Eine Sicherheitseinrichtung **24** erfasst beispielsweise mittels eines Beschleunigungssensors **25** eine Drehbewegung des Bohrhammers **1,** insbesondere des Handgriffs **7** des Bohrhammers **1** um die Arbeitsachse **9.** Der Beschleunigungssensor **25** ist beispielsweise beabstandet zu der Arbeitsachse **9** angeordnet. Ein Drehen des Bohrhammers **1** ist ein typisches Anzeichen für eine Drehblockade des Bohrmeißels **3** im Untergrund. Der Anwender kann kein ausreichendes Haltemoment mehr auf den Handgriff **7** ausüben, um dem von dem Bohrhammer **1** auf den Untergrund wirkenden Drehmoment entgegenzuwirken. Um einer möglichen Verletzung des Anwender, z.B. einem Verdrehen des Handgelenks, vorzubeugen, wird eine kontrollierte Unterbrechung des Betriebs des Bohrhammers **1** durch einen Sicherheitsmodus vorgenommen.

Die Signale des Beschleunigungssensors **25** werden einer Auswertungseinrichtung **26** der Sicherheitseinrichtung **24** zugeführt. In einer Speichereinrichtung **27** der Auswertungseinrichtung **26** sind ein oder mehrere Muster von Signalen abspeichert, welche einer Drehblockade zugeordnet sind. Die Muster können beispielsweise Schwellwerte für die Beschleunigungswerte, Grenzwerte für aufintegrierte Beschleunigungswerte etc. sein. Die Auswertungseinrichtung **26** löst bei einer Übereinstimmung der Signale mit einem Muster den Sicherheitsmodus aus.

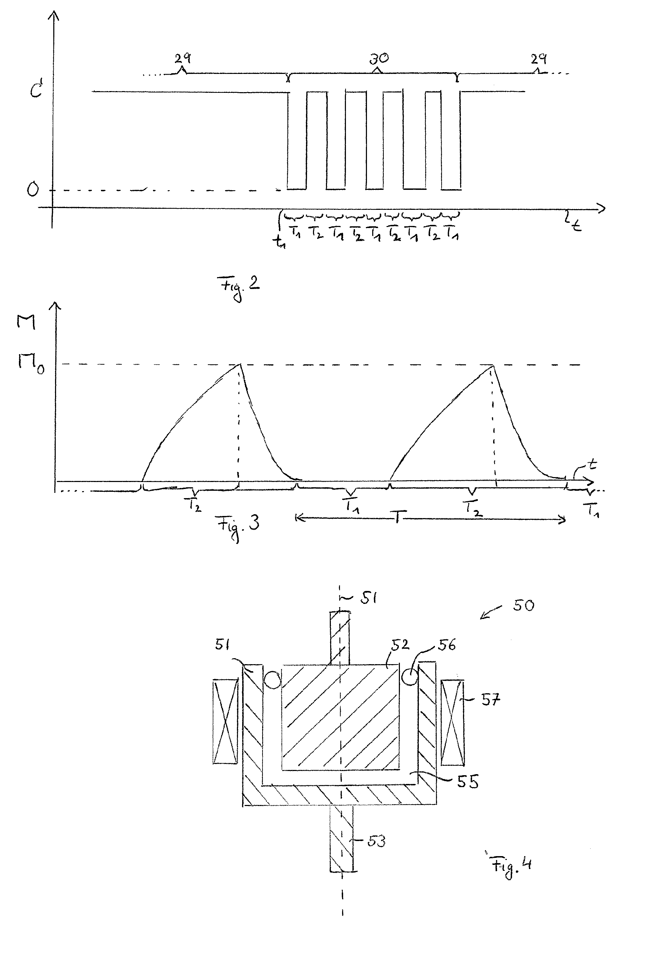

Fig. 2 zeigt den Schaltzustand der schaltbaren Kupplung **20** über die Zeit an, wobei zum Zeitpunkt t1 der Betriebsmodus **29** von dem Sicherheitsmodus **30** abgelöst wird. Im Betriebsmodus **29** ist die schaltbare Kupplung **20** dauerhaft eingekoppelt (Zustand C, um ein Drehmoment zu übertragen. Bei dem Sicherheitsmodus **30** wird die schaltbare Kupplung **20** durch die Steuersignale **21** der Auswertungseinrichtung **26** mehrfach periodisch ausgekoppelt (Zustand O) und eingekoppelt. Der Motor **4** wird somit wiederholt alternierend von der Werkzeugaufnahme **2** und deren Hülse **15** entkoppelt und angekoppelt. Die schaltbare Kupplung **20** wird in Zyklen für eine erste Phase T1 ausgekoppelt und für eine zweite Phase T2 eingekoppelt. Ein Zyklus besteht vorzugsweise aus der ersten Phase T1 und der zweiten Phase T2.

Der Bohrhammer **1** reagiert aufgrund seiner Trägheit mit einer Verzögerung auf die Schaltzyklen der Auswertungseinrichtung **26.** Beim Einkoppeln der schaltbaren Kupplung **20** steigt das an der Werkzeugaufnahme **2** anliegende Drehmoment M während der zweiten Phase T2 an. Die Verzögerung der Drehmomentübertragung ergibt sich durch die Trägheit der bewegten Elemente in dem Antriebsstrang. Fig. 3 zeigt schematisch das an der Werkzeugaufnahme **2** anliegende Drehmoment M. Eine Dauer der zweiten Phase T2 ist vorzugsweise derart gewählt, dass das anliegende Drehmoment M einen Maximalwert M0 erreicht, den der Motor **4** momentan abgeben vermag. Ein Haltemoment der Kupplung **20** ist vorzugsweise größer als der Maximalwert M0 des Motors **4.** Ein Rutschen tritt nicht auf. Die Kupplung **20** beginnt vorzugsweise bei der Last nicht zu rutschen. Die Dauer der zweiten Phase T2 kann fest vorgewählt sein, beispielsweise im Bereich von 2 ms bis 5 ms.

Die Gesamtdauer T eines Zyklus wird vorzugsweise durch die Wahl der ersten Phase T1 im Bereich zwischen 20 ms und 50 ms gewählt. Die Wiederholrate des Öffnens und Schließens liegt somit im Bereich zwischen 20 Hz und 50 Hz. Die von dem Bohrhammer **1** auf den Anwender ausgeübten Belastungen durch die periodisch übertragende Kupplung **20** können durch zusätzliche Dämpfelemente **30** zwischen Handgriff 7 und dem Maschinengehäuse **31** gedämpft werden.

Bei dem Sicherheitsmodus wird die Versorgung zu dem Motor **4** unterbrochen. Die Motorsteuerung **22** kann beispielsweise die Stromzufuhr zu dem Motor **4** mittels eines oder mehrerer Schaltelemente **32** unterbrechen. Der Motor **4** nimmt keine Leistung aus der primären Energiequelle auf, z.B. bei einem Elektromotor aus dem Netzanschluss **23** oder einer Batterie. Aus dem vorhergehenden Betriebsmodus ist in den rotierenden Komponenten des Bohrhammers **1,** insbesondere des Motors **4,** Rotationsenergie gespeichert. Die Rotationsenergie bleibt aufgrund reibungsarmer Lager während der ersten Phase T1 erhalten, da der Motor **4** durch die schaltbare Kupplung **20** von der Werkzeugaufnahme **2** entkoppelt ist. Während der zweiten Phase T2 leistet der Motor **4** Arbeit, indem er ein Drehmoment auf den Antriebsstrang, d.h. die Abtriebswelle **6,** die Werkzeugaufnahme **2** und den Bohrmeißel **3** überträgt. Die Rotationsenergie des Motors **4** verringert sich dabei mit jeder zweiten Phase T2. Es zeigt sich, dass die vorzugsweise verwendeten Elektromotoren mit Drehzahlen von mehr als 10.000 Umdrehungen pro Minute ausreichend Rotationsenergie für wenigstens zehn Einkupplungsvorgänge speichern können und bei den zehn Einkupplungsvorgängen der Motor **4** ein Spitzendrehmoment M0 von wenigstens 90 % seines nominellen Drehmoments im Betriebsmodus abgegeben kann.

Die Sicherheitseinrichtung **24** prüft während des Sicherheitsmodus die Drehbeschleunigung der Werkzeugmaschine **1** um die Arbeitsachse **9.** Falls die Drehbeschleunigung entgegen einer Drehrichtung des Bohrmeißels **3** während eines Zyklus T unter einem Schwellwert bleibt, wird der Sicherheitsmodus beendet. Der Schwellwert beträgt beispielsweise 20 m/s/s. Die Größe des Schwellwerts richtet sich nach dem Haltemoment, welches der Anwender aufbringen kann. Die Bohrmaschine **1** geht in den Betriebsmodus **29** über. Der Motor **4** wird wieder mit seiner Energiequelle zur Leistungsaufnahme verbunden. Der Motor **4** beschleunigt typischerweise wieder auf seine nominelle Drehzahl. Das alternierende Einkuppeln und Auskuppeln der schaltbaren Kupplung **20** wird beendet und die schaltbare Kupplung **20** dauerhaft eingekoppelt.

Anstelle einer fest eingestellten Dauer der zweiten Phase T2 kann diese während des Sicherheitsmodus dynamisch bestimmt werden. Eine Drehmomentsensorik **40** kann das von dem Motor **4** abgegebene und das an der Werkzeugaufnahme **2** anliegende Drehmoment messen und vergleichen. Eine solche Drehmomentsensorik **40** kann beispielsweise auf jeweils einem Drehzahlmesser **41** vor und einem Drehzahlmesser **42** nach der schaltbaren Kupplung **20** basieren. Sobald die von den beiden Drehzahlmessern **41, 42** gemessenen Drehzahlen übereinstimmen, wird das Drehmoment des Motors **4** vollständig übertragen. Die Auswertungseinrichtung **26** gibt das Steuersignal **21** zum Auskuppeln der schaltbaren Kupplung **20** aus und beendet somit die zweite Phase T2 in diesem Zyklus. Zusätzlich kann ein Maximalwert vorgesehen sein, der die Dauer der zweiten Phase T2, für die die schaltbare Kupplung **20** eingekoppelt ist, begrenzt.

Eine weitere Ausführungsform sieht vor, dass während des Sicherheitsmodus eine Drehzahl des Motors **4** überwacht wird. Der Motor **4** wird zwischenzeitlich mit der Energieversorgung verbunden, falls eine Drehzahl unter einen vorgegebenen Schwellwert fällt. Der Schwellwert liegt vorzugsweise zwischen 20 % und 70 % der nominellen Drehzahl des Motors **4** im Betriebsmodus. Eine weitere Ausführungsform sieht vor, den Motor **4** auf eine Drehzahl gleich auf einen Wert im Bereich zwischen 20 % und 70 % der nominellen Drehzahl, z.B. dem obigen Schwellwert abbremsen. Das Abbremsen kann beispielsweise durch einen generatorischen Betrieb des Motors **4** die Dissipation in der Kupplung **20** unterstützen. Die generierte elektrische Leistung kann über Lastwiderstände dissipiert werden.

Eine weitere Ausführungsform sieht eine schaltbare Kupplung **20** vor, die in einem ersten Modus mindestens ein erstes Drehmoment und in einem zweiten Modus ein zweites Drehmoment übertragen kann. Das zweite Drehmoment beträgt vorzugsweise zwischen 20 % und 50 % des ersten Drehmoments. Beim Sicherheitsmodus wechselt die Kupplung **20** alternierend zwischen dem ersten Modus und dem zweiten Modus. Die Kupplung **20** kann in dem ersten Modus kann für die erste Phase T1 und in dem zweite Modus für die zweite Phase T2 gehalten werden. Der Motor **4** ist permanent mit der Werkzeugaufnahme **2** gekoppelt und baut folglich kontinuierlich seine Rotationsenergie ab.

Fig. 4 zeigt eine beispielhafte rheologische Kupplung **50,** die besonders als Ausführung einer schaltbaren Kupplung **20** geeignet ist. Die rheologische Kupplung **50** hat eine Schale **51,** innerhalb der ein, vorzugsweise zylindrisches, Kopfstück **52** drehbar um eine Drehachse **51** angeordnet ist. Die Schale **51** kann mit einer ersten Welle **53** und das Kopfstück **52** mit einer zweiten Welle **54** verbunden sein. Ein Hohlraum **55** der Schale **51** mit dem darin befindlichen Kopfstück **52** ist durch ein Dichtelement **56,** zum Beispiel ein O-Ring auf der zweiten Welle **54,** abgeschlossen.

In dem Hohlraum **55** ist eine rheologische Flüssigkeit eingefüllt. Die rheologische Flüssigkeit enthält magnetische Partikel, beispielsweise Eisenpartikel, welche sich unter einem angelegten Magnetfeld in der Flüssigkeit ausrichten. Dabei erhöht sich die Viskosität der rheologischen Flüssigkeit und eine Drehmomentübertragung erfolgt zwischen dem Kopfstück **52** und der Schale **51.** Neben oder um die Schale **51** ist eine Magnetspule **57** angeorndet, mittels welcher ein den Hohlraum **55** und die rheologische Flüssigkeit durchdringendes Magnetfeld angelegt werden kann. Die Magnetspule **57** wird durch die Steuersignale **21** der Sicherheitseinrichtung **24** angesteuert. Während der ersten Phase T1 fließt ein Strom durch die Magnetspule **57.** Während der zweiten Phase fließt kein Strom oder ein gegen über der ersten Phase T1 um wenigstens 50 % geringerer Strom durch die Magnetspule **57.**

Eine alternative Ausführungsform sieht einen Permanentmagnet vor. Eine zusätzliche Magnetspule erzeugt ein Magnetfeld, dass das von den Permanentmagneten erzeugte Magnetfeld in dem Hohlraum kompensiert, um die schaltbare Kupplung auszukoppeln. Während der ersten Phase T1 fließt ein Strom durch die Magnetspule, in der zweiten Phase T2 fließt kein Strom durch die Magnetspule.

Die beschriebenen Ausführungsbeispiele beziehen sich auf einen Bohrhammer als Beispiel einer handgeführten Werkzeugmaschine mit einem rotierenden Werkzeug. Die Erfindung umfasst gleichermaßen andere handgeführte Werkzeugmaschinen mit rotierenden Werkzeugen, die längs der Drehachse in ein Werkstück eindringen, z.B. Diamantbohrgeräte.

## Patentansprüche

1. Steuerungsverfahren für eine Werkzeugmaschine, welches einen Betriebsmodus (**28**) und einen Sicherheitsmodus (**29**) hat, wobei
im Betriebsmodus ein Motor (**4**) eine Werkzeugaufnahme (**2**) um eine Arbeitsachse (9) rotierend antreibt und eine Leistungsaufnahme des Motors (**4**) dabei wenigstens einen Betriebswert hat, und
der Sicherheitsmodus ausgelöst wird, wenn eine Sicherheitseinrichtung (**24**) eine Drehblockade der Werkzeugaufnahme (**2**) erfasst, wobei im Sicherheitsmodus eine Drehmomentbegrenzung einer im Antriebsstrang zwischen Motor (**4**) und Werkzeugaufnahme (**2**) angeordneter, durch elektrische Signale schaltbarer Kupplung (**20**) periodisch variiert wird und eine Leistungsaufnahme des Motors (**4**) gegenüber dem Betriebswert verringert wird.

2. Steuerungsverfahren nach Anspruch 1, **dadurch gekennzeichnet, dass** im Sicherheitsmodus die durch elektrische Signale schaltbare Kupplung (**20**) periodisch auskoppelt und einkoppelt.

3. Steuerungsverfahren nach Anspruch 1 oder 2, **dadurch gekennzeichnet, dass** der Motor (**4**) im Sicherheitsmodus von einer Energieversorgung (**23**) getrennt wird.

4. Steuerungsverfahren nach Anspruch 1 oder 2, **dadurch gekennzeichnet, dass** eine Sensoreinrichtung eine Drehbeschleunigung der Werkzeugmaschine um die Arbeitsachse erfasst, und der Sicherheitsmodus beendet und der Betriebsmodus wieder aufgenommen wird, wenn die Drehbeschleunigung einen Schwellwert unterschreitet.

5. Werkzeugmaschine mit
einer Werkzeugaufnahme (**2**) zum Aufnehmen eines Werkzeugs,
einem Motor (**4**),
einem Antriebsstrang (**6**, **17**), der eine Drehbewegung des Motors auf die Werkzeugaufnahme überträgt,
einer durch elektrische Signale schaltbaren Kupplung (**20**),
eine Sensoreinrichtung (**25**), welche bei einer Drehblockade der Werkzeugaufnahme (**2**) ein Steuersignal ausgibt,
einer Auswertungseinrichtung (**26**), welche ansprechend auf das Steuersignal eine Drehmomentbegrenzung der schaltbaren Kupplung (**20**) periodisch variiert,
einer Motorsteuerung (**22**), die ansprechend auf das Steuersignal eine Leistungsaufnahme des Motors (**4**) verringert.

6. Werkzeugmaschine nach Anspruch 5, **dadurch gekennzeichnet, dass** die Motorsteuerung (**22**) ein Schaltelement (**32**) zum Unterbrechen einer Energieversorgung (**23**) des Motors (**4**) aufweist und ansprechend auf das Steuersignal (**21**) die Energieversorgung (**23**) unterbricht.

7. Werkzeugmaschine nach Anspruch 5 oder 6, **dadurch gekennzeichnet, dass** die schaltbare Kupplung (**20**, **50**) eine rheologische Flüssigkeit enthält.

8. Werkzeugmaschine nach Anspruch 7, **dadurch gekennzeichnet, dass** die schaltbare Kupplung (**20**, **50**) ein Kopfstück (**52**) und eine das Kopfstück (**52**) in radialer Richtung umschließende Schale (**51**) aufweist, und die rheologische Flüssigkeit eine radiale Außenfläche des Kopfstücks (**52**) und eine radiale Innenfläche der Schale (**51**) benetzt.
